Europäisches Patentamt

European Patent Office

Office européen des brevets

(11) Veröffentlichungsnummer : **0 183 267**
**B1**

(12) **EUROPÄISCHE PATENTSCHRIFT**

(45) Veröffentlichungstag der Patentschrift :
15.03.89

(51) Int. Cl.⁴ : **F 16 F 13/00, B 60 K   5/12**

(21) Anmeldenummer : **85115104.3**

(22) Anmeldetag : **28.11.85**

(54) Motorlager mit hydraulischer Dämpfung.

(30) Priorität : **29.11.84 DE 3443618**

(43) Veröffentlichungstag der Anmeldung :
**04.06.86 Patentblatt 86/23**

(45) Bekanntmachung des Hinweises auf die Patenterteilung : **15.03.89 Patentblatt 89/11**

(84) Benannte Vertragsstaaten :
**DE FR GB IT SE**

(56) Entgegenhaltungen :
**EP--A-- 0 149 080**
**DE--A-- 2 652 501**
**DE--A-- 3 239 787**
**DE--A-- 3 336 204**
**DE--U-- 8 119 912**
**FR--A-- 1 162 881**
**FR--A-- 2 555 273**
**FR--A-- 2 558 229**
**US--A-- 2 380 899**
**PATENTS ABSTRACTS OF JAPAN, Band 9, Nr. 162 (M-394) [1885], 6. Juli 1985; & JP - A - 60 34543 (HONDA) 22-02-1985**

(73) Patentinhaber : **METZELER Gesellschaft mit beschränkter Haftung**
**Gneisenaustrasse 15**
**D-8000 München 50 (DE)**

(72) Erfinder : **Andrä, Rainer, Dr.**
**Dehrnerstrasse 10**
**D-6250 Limburg (DE)**
Erfinder : **Hofmann, Manfred**
**Gerhard-von-Dietz-Strasse 15**
**D-6257 Hünfelden 1 (DE)**

(74) Vertreter : **Michelis, Theodor, Dipl.-Ing. et al**
**Gneisenaustrasse 15**
**D-8000 München 50 (DE)**

## Beschreibung

Die Erfindung betrifft ein Motorlager mit hydraulischer Dämpfung entsprechend dem Oberbegriff des Patentanspruchs 1.

Ein derartiges Lager ist aus der DE-A-32 39 787 bekannt.

Ein Lager mit geringfügig einstellbarer Radialsteifigkeit ist aus der DE-OS 26 52 501 bekannt. Darüber hinaus ist ein solches Lager in der EP-A-13 67 00 (Stand der Technik nach Art 54 (3) EPÜ) bereits vorgeschlager worden. Dabei ist eine Beeinflussung der Radialsteifigkeit nur durch Variation der Parameter des die Halterungsplatte aufnehmenden elastomeren Materials möglich.

Demgegenüber liegt der Erfindung die Aufgabe zugrunde, ein hydraulisch gedämpftes Motorlager zu schaffen, mit dem die Radialsteifigkeit des Lagers zusätzlich beeinflußt werden kann, und das gleichzeitig eine integrale Wegbegrenzung in Zug- und in Druckrichtung aufweist.

Die Lösung dieser Aufgabe ist ausgehend von dem eingangs genannten Stand der Technik durch den kennzeichnenden Teil des Anspruchs 1 definiert.

Durch den kelchförmig erweiterten Ring ist zur Kammerwandung ein zusätzlicher Ringraum geschaffen, dessen Flüssigkeitsvolumen bei Radialbewegungen des Schubelementes eine zusätzliche Dämpfungswirkung ausübt.

Dieser nach innen ragende Ring kann einmal als Anschlag in Druckrichtung gegen die Zwischenplatte herangezogen werden, wobei es zweckmäßig ist, daß der Ring im Bereich der Membranhalterung eine wulstförmige Einziehung mit einer verdickten Gummiauflage aufweist.

Durch die kelchförmige Erweiterung wirkt dieser Ring aber gleichzeitig auch als Anschlag in Zugrichtung gegen die Kammerwandung, wobei zweckmäßigerweise im Bereich des äußeren Randes des kelchförmigen Ringes in die Kammerwandung ein sich über die gesamte Wandungsdicke erstreckender metallischer Ring als Zuganschlag einvulkanisiert ist. Dieser einvulkanisierte Ring kann dann auf seiner Außenseite von einem eingezogenen Rand eines das Motorlager umschließenden Ringes überdeckt sein, um damit eine Begrenzung möglicher Streckungen in Zugrichtung zu bewirken.

Anhand einer schematischen Zeichnung ist Aufbau und Wirkungsweise eines Ausführungsbeispiels nach der Erfindung näher erläutert.

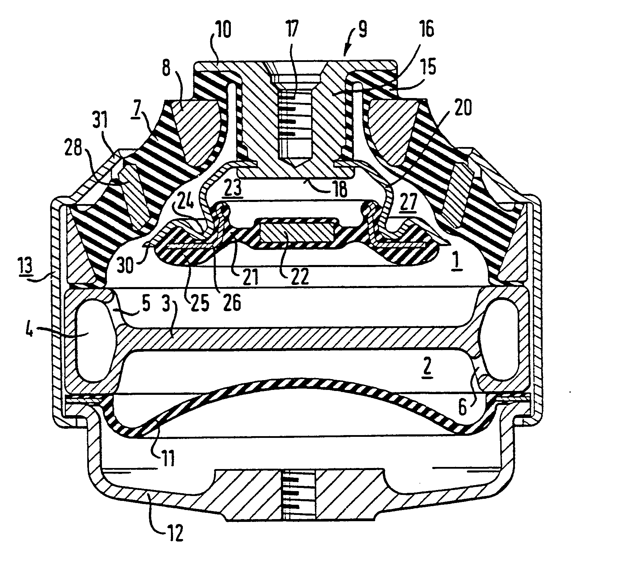

Dabei zeigt die einzige Figur einen Längsschnitt durch ein derartiges Motorlager.

Wie aus der Zeichnung ersichtlich ist, weist das Motorlager eine Arbeitskammer 1 und eine Ausgleichskammer 2 auf, die über einen an die Zwischenplatte 3 angrenzenden wendelförmigen Kanal 4 mit einem Einlaß 5 und einem Auslaß 6 miteinander in Verbindung stehen. Die Arbeitskammer 1 ist von einer angenähert kegelmantelförmigen und als Tragfeder wirkenden Umfangswand 7 umschlossen, die stirnseitig von einem Lagerring 8 und einem auf seiner Oberseite aufvulkanisierten, als Halterungsplatte 10 ausgebildeten Schubelement 9 mit einstellbarer Radialsteifigkeit abgeschlossen ist.

Die Ausgleichskammer 2 ist von einem elastischen Balg 11 begrenzt und wird von einem unteren Gehäusedeckel 12, der gleichzeitig als Montagepunkt dient, nach außen abgeschlossen. Die wesentlichen das Motorlager bildenden Einzelteile, nämlich die kegelmantelförmige Kammerwandung 7, die Zwischenplatte 3 mit dem Kanal 4, der Balg 11 und der Gehäusedeckel 12 werden von einem außen liegenden Ring 13 umfaßt und abdichtend gegeneinander verspannt.

Die Einstellung der Radialsteifigkeit des Schubelementes 9 erfolgt im wesentlichen durch entsprechende Dimensionierung und Kennwerteinstellung der zwischen dem überstehenden Rand der Halterungsplatte 10 und dem stirnseitigen Lagerring 8 einvulkanisierten Gummimaterials 15. Das Schubelement 9 weist darüber hinaus einen frei in die Arbeitskammer 1 ragenden zylindrischen Ansatz 16 auf, in den beispielsweise eine Gewindebohrung 17 zum Anschluß des abzustützenden Motors eingelassen ist.

An die innenliegende Stirnseite 18 des Ansatzes 16 ist nunmehr ein sich in Richtung zur Kammerwandung 7 kelchartig erweiternder Ring 20 angeschlossen, der mit der Kammerwandung 7 einen zum Arbeitsraum 1 hin offenen Ringraum 27 begrenzt. Bei entsprechenden Radialbewegungen des Schubelementes 9 wird somit durch die Verdrängung der Flüssigkeit innerhalb des Ringraumes 27 eine zusätzliche Dämpfungswirkung auf diese Radialbewegungen ausgeübt.

Das freie Ende des kelchförmig erweiterten Ringes 20 ist ferner mit einer gummielastischen Membran 21 abgeschlossen, die eine kreisscheibenförmige Tilgermasse 22 umschließt und innerhalb des Ringes 20 ein Luftvolumen 23 zur einstellbaren Dämpfung der Schwingungen der Tilgermasse einschließt.

Der Ring 20 weist ferner im Bereich der Halterung der Membran 21 eine wulstförmige Einziehung 24 auf, die zur Trennwand 3 mit einer verdickten Gummiauflage 25 versehen ist und über einen innenliegenden winkelförmigen Versteifungsring 26 unmittelbar mit der eigentlichen Membran 21 in Verbindung steht, und somit als Spannring für die Halterung der Membran 21 in dem Ring 20 dient. Die Gummiauflage 25 dient darüber hinaus als Anschlag in Druckrichtung gegen die Zwischenplatte 3, um ein zu starkes Einfedern des Lagers zu verhindern.

Gleichzeitig kann der äußere Rand 30 des Ringes 20 aber auch als Anschlag in Zugrichtung gegenüber der Kammerwandung 7 dienen. Um dabei bei plötzlichen Zugbeanspruchungen großer Amplitude eine Überbeanspruchung der Kammerwandung 7 zu vermeiden, ist zweckmäßigerweise in die Kammerwandung 7 ein sich über die gesamte Wandungsdicke erstreckender metallischer Ring 28 einvulkanisiert, der auf seiner Außenseite von dem eingezogenen Rand 31 des das Motorlager umschließenden Ringes 13 überdeckt ist.

Somit ist also ein Motorlager geschaffen, mit dem einmal Bewegungen in Radialrichtung zusätzlich abgedämpft werden können und das gleichzeitig einen integrierten Anschlag in Druck- und in Zugrichtung aufweist, wo bei Überbeanspruchungen und damit evtl. Schädigungen des Lagers sicher vermieden werden können.

**Patentansprüche**

1. Motorlager mit hydraulischer Dämpfung, insbesondere für Kraftfahrzeuge, mit mindestens einer flüssigkeitsgefüllten und eine angenähert kegelmantelförmige, gummielastische und als Tragfeder dienende Umfangswand (7) aufweisende Kammer (1), die stirnseitig von einer Halterungsplatte (10) abgeschlossen ist, wobei an der innenliegenden Stirnseite (18) der Halterungsplatte (10) ein sich in Richtung zur Kammerwandung (7) kelchförmig erweiternder Ring (20) angeschlossen ist, der angenähert parallel zur Innenkontur der Kammerwandung (7) verläuft und dem als Druckanschlag eine die andere Stirnseite der Kammer (1) bildende Zwischenplatte (3) gegenübersteht, dadurch gekennzeichnet, daß

a) zwischen der gummielastischen Umfangswand (7) und der als Schubelement (9) ausgebildeten Halterungsplatte (10) ein Lagerring (8) angeordnet ist, wobei zwischen dem Lagerring (8) und der Halterungsplatte (10) Gummimaterial (15) mit einstellbarer Radialsteifigkeit einvulkanisiert ist und die Halterungsplatte (10) einen zentralen, nach innen frei in die Kammer ragenden, zylindrischen Ansatz (16) aufweist, dessen Stirnseite (18) den kelchförmig erweiterten Ring (20) trägt, und

b) das freie Ende des kelchförmig erweiterten Ringes (20) unter Einschluß eines Luftvolumens (23) mit einer gummielastischen Membran (21) abgeschlossen ist.

2. Motorlager nach Anspruch 1, dadurch gekennzeichnet, daß der Ring (20) im Bereich der Membranhalterung eine wulstförmige Einziehung (24) mit einer verdickten Gummiauflage (25) als Druckanschlag aufweist.

3. Motorlager nach Anspruch 1, dadurch gekennzeichnet, daß im Bereich des äußeren Randes (30) des kelchförmigen Ringes (20) in die Kammerwandung (7) ein sich über die gesamte Wandungsdicke erstreckender metallischer Ring (28) als Zuganschlag einvulkanisiert ist.

4. Motorlager nach Anspruch 3, dadurch gekennzeichnet, daß der einvulkanisierte Ring (28) auf seiner Außenseite von einem eingezogenen Rand (31) eines das Motorlager umschließenden Ringes (13) überdeckt ist.

5. Motorlager nach Anspruch 1, dadurch gekennzeichnet, daß die Membran (21) eine kreisscheibenförmige Tilgermasse (22) umschließt.

**Claims**

1. Engine mount with hydraulic damping, in particular for motor vehicles, with at least one fluid-filled chamber (1), having an elastomeric peripheral wall (7) of approximately the form of a cone-shaped shell and serving as frame spring, which chamber is closed off at the end by a holding plate (10), a ring (20) widened in the shape of a bell in the direction of the chamber wall (7) being connected on the inner end face (18) of the holding plate (10), which ring runs approximately parallel to the inner contour of the chamber wall (7) and has opposite it, as a compression stop, an intermediate plate (3) forming the other end face of the chamber (1), characterized in that

a) a bearing ring (8) is arranged between the elastomeric peripheral wall (7) and the holding plate (10), designed as a thrust element (9), rubber material (15) of adjustable radial rigidity being vulcanized-in between the bearing ring (8) and the holding plate (10) and the holding plate (10) bearing a central cylindrical extension (16), protruding freely inwards into the chamber, the end face (18) of which extension bears the ring (20) widened in the shape of a bell, and

b) the free end of the ring (20) widened in the shape of a bell is closed off by an elastomeric membrane (21), with the inclusion of a volume of air (23).

2. Engine mount according to Claim 1, characterized in that the ring (20) has in the region of the membrane holder a bead-shaped constriction (24) with a thickened rubber support (25) as compression stop.

3. Engine mount according to Claim 1, characterized in that a metallic ring (28), extending over the entire wall thickness, is vulcanized-in as a tension stop in the region of the outer rim (30) of the bell-shaped ring (20) in the chamber wall (7).

4. Engine mount according to Claim 3, characterized in that the vulcanized-in ring (28) is covered on its outside by a drawn-in rim (31) of a ring (13) enclosing the engine mount.

5. Engine mount according to Claim 1, characterized in that the membrane (21) encloses a circular disc-shaped absorption mass (22).

**Revendications**

1. Support de moteur à amortissement hydraulique, notamment pour véhicules automobiles, comprenant au moins une chambre (1) qui est emplie de liquide, qui comporte une paroi périphérique (7) approximativement en forme de surface latérale conique, ayant l'élasticité du caoutchouc et servant de ressort de suspension, et qui est fermée par une plaque de fixation (10), un anneau (20), s'évasant en forme de coupe dans la direction de la paroi de la chambre, étant relié au côté frontal intérieur (18) de la plaque de fixation (10), et s'étendant approximativement parallèlement au contour intérieur de la paroi de la chambre (7), une plaque intermédiaire (3) formant l'autre côté frontal de la chambre (1) et servant de butée en compression lui faisant face, caractérisé en ce que,

a) entre la paroi périphérique (7) ayant l'élasticité du caoutchouc et la plaque de fixation (10) constituée en élément de poussée (9) est disposé un anneau support (8), du matériau en caoutchouc (15), de rigidité radiale réglable, étant vulcanisé entre l'anneau support (8) et la plaque de fixation (10) et la plaque de fixation (10) comportant un prolongement cylindrique (16) central, qui fait saillie librement dans la chambre et dont le côté frontal (18) porte l'anneau (10) évasé en forme de coupe,

b) l'extrémité libre de l'anneau (20) s'évasant en forme de coupe, est fermée avec inclusion d'un volume d'air (23) par une membrane (21) ayant l'élasticité du caoutchouc.

2. Support de moteur suivant la revendication 1, caractérisé en ce que l'anneau (20) comporte, dans la région de la fixation de la membrane, un redent (24) en forme de bourrelet, servant de butée à la pression et ayant un support en caoutchouc (25) épaissi.

3. Support de moteur suivant la revendication 1, caractérisé en ce que, dans la région du bord extérieur (30) de l'anneau (20) en forme de coupelle, est inséré par vulcanisation dans la paroi de la chambre (7), à titre de butée à la traction, un anneau métallique (28) s'étendant sur toute l'épaisseur de la paroi.

4. Support de moteur suivant la revendication 3, caractérisé en ce que l'anneau (28) inséré par vulcanisation est recouvert, sur son côté extérieur, d'un bord rentrant (31) d'un anneau (13) entourant le support de moteur.

5. Support de moteur suivant la revendication 1, caractérisé en ce que la membrane (21) entoure une masse d'amortissement (22) en forme de disque circulaire.